# EUROPEAN PATENT APPLICATION

(11) **EP 4 776 709 A1**
(43) Date of publication of application: **15.07.2026**
(21) Application number: 24884384.9
(22) Date of filing: 10.10.2024
(51) Int. Cl.: H04W 56/00

(54) **COMMUNICATION METHOD AND APPARATUS**

(30) Priority: 31.10.2023 CN 202311447622
(71) Applicant: HUAWEI TECHNOLOGIES CO., LTD., Shenzhen, Guangdong 518129 (CN)
(72) Inventor: FAN, Bo, Shenzhen, Guangdong 518129 (CN); LI, Fang, Shenzhen, Guangdong 518129 (CN)
(74) Representative: Pfenning, Meinig & Partner mbB
(86) International application number: PCT/CN2024/123879
(87) International publication number: WO 2025/092380

(57) **Abstract**

This application provides a communication method and an apparatus. The method includes: receiving a configuration message, where the configuration message includes a configuration parameter of one or more cells, the cells include a first cell, and the first cell is a cell with only an uplink receiving capability; sending a first signal at a first moment via the first cell, where the first moment is related to first downlink timing, the first downlink timing is downlink timing of a second cell associated with the first cell, and the second cell is a cell with an uplink receiving capability and a downlink receiving capability; and receiving a first response message of the first cell via the second cell, where the first response message includes a first timing advance TA value of the first cell. The first TA value of the first cell may be obtained based on the downlink timing of the second cell, so that a terminal device can communicate with a network device based on the first TA value via the first cell, thereby improving communication efficiency.

## Description

This application claims priority to Chinese Patent Application No. 202311447622.4, filed with the China National Intellectual Property Administration on October 31, 2023 and entitled "COMMUNICATION METHOD AND APPARATUS", which is incorporated herein by reference in its entirety.

### TECHNICAL FIELD

This application relates to the communication field, and in particular, to a communication method and an apparatus.

### BACKGROUND

In wireless communication systems, to ensure that time at which data sent by a terminal device arrives at a network device matches an uplink slot of the network device, the network device may typically calculate a timing advance (timing advance, TA) value, and then send the TA value to the terminal device, so that the terminal device can send signals, messages, or the like based on the TA value. Because uplink coverage and downlink coverage of the network device may be unbalanced (downlink coverage is typically better than uplink coverage), some network devices that have an uplink receiving function but do not have a downlink sending function may be deployed to compensate uplink coverage.

For such type of network devices with an uplink receiving function but without a downlink sending function, when performing uplink transmission to the network device, the terminal device also needs to determine a TA value corresponding to the network device. However, because such type of network devices do not have the downlink sending function, and thus are incapable of sending the TA value to the terminal device, time at which data sent by the terminal device arrives at the network device does not match an uplink slot of the network device. Consequently, data transmission efficiency is low. Therefore, how to improve data transmission efficiency is a problem to be resolved.

### SUMMARY

This application provides a communication method and an apparatus, so that a terminal device obtains a timing advance TA value. In this way, the terminal device performs uplink and downlink communication with a network device based on the TA value, thereby improving data transmission efficiency.

According to a first aspect, an embodiment of this application provides a communication method. The method may be performed by a terminal device, may be performed by a component (for example, a chip or a chip system) disposed in the terminal device, or may be implemented by a logical module or software that can implement all or some functions of the terminal device. This is not limited in this application.

For example, the method includes: receiving a configuration message, where the configuration message includes a configuration parameter of one or more cells, the cells include a first cell, and the first cell is a cell with only an uplink receiving capability; sending a first signal at a first moment via the first cell, where the first moment is related to first downlink timing, the first downlink timing is downlink timing of a second cell associated with the first cell, and the second cell is a cell with an uplink receiving capability and a downlink receiving capability; and receiving a first response message via the second cell, where the first response message includes a first timing advance TA value of the first cell.

In the foregoing technical solution, the terminal device may determine, by using the received configuration message, one or more cells (the first cell) that are configured by a network device for the terminal device and that have only an uplink receiving capability. To obtain the first TA value of the first cell, the terminal device may send the first signal to the network device based on the first moment related to the first downlink timing. The first TA value is determined based on a second moment, thereby affecting the second moment at which the network device receives the first signal. In other words, the first TA value is indirectly determined based on the first moment and the first downlink timing. After receiving the first TA value that is of the first cell and that is sent by the network device, the terminal device may determine, based on the first TA value, time at which the terminal device sends data. For example, in subsequent uplink transmission, an uplink signal may be sent earlier than the uplink slot start moment of the terminal device by the first TA value, so that it can be ensured that time at which the uplink signal arrives at the first cell matches uplink slot start time of the first cell, thereby improving communication efficiency.

With reference to the first aspect, in some possible implementations of the first aspect, the first cell is a cell that meets one or more of the following: no downlink bandwidth part is configured for the cell; no physical downlink shared channel parameter is configured for the cell; no physical downlink control channel parameter is configured for the cell; no channel state information measurement parameter is configured for the cell; no uplink-downlink frame structure parameter is configured for the cell; and an associated second cell is configured for the cell.

In the foregoing technical solution, whether the cell is the first cell may be implicitly determined depending on whether the foregoing parameter is configured in a configuration parameter of the first cell, without a need of a specific parameter indicating whether the cell is the first cell, thereby reducing an amount of transmitted data and reducing a waste of transmission resources.

With reference to the first aspect, in some possible implementations of the first aspect, for any cell in the one or more cells, if a configuration parameter of the any cell includes a first parameter, the any cell is the first cell; or if a value of a first parameter in a configuration parameter of the any cell is a first value, the any cell is the first cell.

In the foregoing technical solution, whether the cell is the first cell is explicitly indicated by the first parameter, and whether the cell is the first cell may be directly determined by using the first parameter. Therefore, there is no need to determine whether the cell is the first cell, thereby improving a data processing speed.

With reference to the first aspect, in some possible implementations of the first aspect, the cells further include one or more second cells, the configuration message includes an association relationship between the first cell and the second cells, and the second cell associated with the first cell is determined based on the association relationship.

In the foregoing technical solution, the cells include the second cell, and the configuration message includes the association relationship between the first cell and the second cells, so that the association relationship between the first cell and the second cells can be directly obtained, thereby improving a data processing speed.

With reference to the first aspect, in some possible implementations of the first aspect, the cells further include one or more second cells, and the second cell associated with the first cell is an initial second cell/a last second cell/a second cell with a smallest identity/a second cell with a largest identity in the one or more second cells.

In the foregoing technical solution, the cells include the second cell, but an association relationship between the first cell and the second cells is not included, so that an amount of transmitted data can be reduced and a waste of transmission resources can be reduced.

With reference to the first aspect, in some possible implementations of the first aspect, the second cell associated with the first cell is a primary cell in a cell group to which the first cell belongs; or the second cell associated with the first cell is an initial second cell/a last second cell/a second cell with a smallest identity/a second cell with a largest identity in a cell group or a timing advance group to which the first cell belongs.

In the foregoing technical solution, the second cell associated with the first cell is obtained according to some specific rules. For example, the second cell associated with the first cell is the primary cell in the cell group to which the first cell belongs. For example, the second cell associated with the first cell is the initial second cell/the last second cell/the second cell with the smallest identity/the second cell with the largest identity in the cell group or the timing advance group to which the first cell belongs.

With reference to the first aspect, in some possible implementations of the first aspect, the first response message further includes an index of the first cell or an index of the timing advance group to which the first cell belongs.

With reference to the first aspect, in some possible implementations of the first aspect, the method further includes: receiving a timing update message, where the timing update message includes an TA adjustment value corresponding to the second cell associated with the first cell; and updating the first TA value of the first cell based on the TA adjustment value corresponding to the second cell associated with the first cell.

Because a communication delay between the terminal device and the network device may change (for example, the terminal device moves), a TA value of a cell may also change. In the foregoing technical solution, the first TA value of the first cell may be updated by receiving the timing update message including the TA adjustment value corresponding to the second cell associated with the first cell.

With reference to the first aspect, in some possible implementations of the first aspect, the timing update message further includes an index of the second cell associated with the first cell or an index of a timing advance group to which the second cell associated with the first cell belongs.

According to a second aspect, this application provides a communication method. The method may be performed by a network device, may be performed by a component (for example, a chip or a chip system) disposed in the network device, or may be implemented by a logical module or software that can implement all or some functions of the network device. This is not limited in this application.

For example, the method includes: sending a configuration message, where the configuration message includes a configuration parameter of one or more cells, the cells include a first cell, and the first cell is a cell with only an uplink receiving capability; receiving, at a second moment, a first signal sent by a terminal device at a first moment, where the first moment is related to first downlink timing, the first downlink timing is downlink timing of a second cell associated with the first cell, and the second cell is a cell with an uplink receiving capability and a downlink sending capability; determining a first timing advance TA value of the first cell based on uplink timing of the first cell and the second moment; and sending a first response message via the second cell, where the first response message includes the first TA value of the first cell.

In the foregoing technical solution, the network device may configure the terminal device by sending the configuration message. For example, a cell (the first cell) with only an uplink receiving capability is configured for the terminal device. To obtain the first TA value of the first cell, the network device may receive, at the second moment, the first signal sent by the terminal device based on the first moment related to the first downlink timing. The first TA value is determined based on the second moment. After receiving the first signal, the network device may determine the first TA value of the first cell based on the second moment and the uplink timing corresponding to the first cell, and send the first TA to the terminal device via the second cell with the downlink sending capability. In this way, the terminal device obtains the first TA value of the first cell with only the uplink receiving capability, so that the terminal device can determine, based on the first TA value, time at which the terminal device sends data. Therefore, time at which the data sent by the terminal device arrives at the first cell matches uplink slot start time of the first cell, thereby improving communication efficiency.

With reference to the second aspect, in some possible implementations of the second aspect, the first cell is a cell that meets one or more of the following: no downlink bandwidth part is configured for the cell; no physical downlink shared channel parameter is configured for the cell; no physical downlink control channel parameter is configured for the cell; no channel state information measurement parameter is configured for the cell; no uplink-downlink frame structure parameter is configured for the cell; and an associated second cell is configured for the cell.

With reference to the second aspect, in some possible implementations of the second aspect, for any cell in the one or more cells, if a configuration parameter of the any cell includes a first parameter, the any cell is the first cell; or if a value of a first parameter in a configuration parameter of the any cell is a first value, the any cell is the first cell.

With reference to the second aspect, in some possible implementations of the second aspect, the cells further include one or more second cells, the configuration message includes an association relationship between the first cell and the second cells, and the second cell associated with the first cell is determined based on the association relationship.

With reference to the second aspect, in some possible implementations of the second aspect, the cells further include one or more second cells, and the second cell associated with the first cell is an initial second cell/a last second cell/a second cell with a smallest identity/a second cell with a largest identity in the one or more second cells.

With reference to the second aspect, in some possible implementations of the second aspect, the second cell associated with the first cell is a primary cell in a cell group to which the first cell belongs; or the second cell associated with the first cell is an initial second cell/a last second cell/a second cell with a smallest identity/a second cell with a largest identity in a cell group or a timing advance group to which the first cell belongs.

With reference to the second aspect, in some possible implementations of the second aspect, the first response message further includes an index of the first cell or an index of the timing advance group to which the first cell belongs.

With reference to the second aspect, in some possible implementations of the second aspect, the method further includes: sending a timing update message, where the timing update message includes an TA adjustment value corresponding to the second cell associated with the first cell.

With reference to the second aspect, in some possible implementations of the second aspect, the timing update message further includes an index of the second cell associated with the first cell or an index of a timing advance group to which the second cell associated with the first cell belongs.

According to a third aspect, this application provides a communication apparatus, to implement the method according to any one of the first aspect and the possible implementations of the first aspect or the method according to any one of the second aspect and the possible implementations of the second aspect. The apparatus includes a corresponding unit configured to perform the foregoing method. The unit included in the apparatus may be implemented by using software and/or hardware.

According to a fourth aspect, this application provides a communication apparatus. The apparatus includes a processor. The processor is coupled to a memory, and may be configured to execute a computer program in the memory, to implement the method according to any one of the first aspect and the possible implementations of the first aspect or the method according to any one of the second aspect and the possible implementations of the second aspect.

Optionally, the apparatus further includes a communication interface, and the processor is coupled to the communication interface. The communication interface is configured to receive a signal from a communication device other than the device and transmit the signal to the processor, or send a signal from the processor to a communication device other than the device. For example, the communication interface may be a transceiver, a circuit, a bus, a module, or a communication interface of another type.

Optionally, the apparatus further includes the memory, and the processor is coupled to the memory. The memory is configured to store program instructions and data.

According to a fifth aspect, this application provides a computer-readable storage medium. The computer-readable storage medium stores a computer program or instructions. When the computer program or instructions are executed, the method according to any one of the first aspect and the possible implementations of the first aspect or the method according to any one of the second aspect and the possible implementations of the second aspect is implemented.

According to a sixth aspect, this application provides a computer program product. The computer program product includes instructions. When the instructions are run, the method according to any one of the first aspect and the possible implementations of the first aspect or the method according to any one of the second aspect and the possible implementations of the second aspect is implemented.

According to a seventh aspect, this application provides a chip system. The chip system includes at least one processor, configured to support implementation of a function in any one of the first aspect and the possible implementations of the first aspect, or configured to support implementation of a function in any one of the second aspect and the possible implementations of the second aspect, for example, receiving or processing data in the foregoing method.

In a possible design, the chip system further includes a memory, the memory is configured to store program instructions and data, and the memory is located inside or outside the processor.

The chip system may include a chip, or may include a chip and another discrete device.

According to an eighth aspect, this application provides a communication system, including: a terminal device, configured to implement the method according to any one of the first aspect and the possible implementations of the first aspect; and a network device, configured to implement the method according to any one of the second aspect and the possible implementations of the second aspect.

It should be understood that technical solutions of the third aspect to the eighth aspect of this application correspond to the technical solutions of the first aspect and the second aspect of this application, and beneficial effects achieved by the aspects and corresponding feasible implementations are similar. Details are not described herein again.

### BRIEF DESCRIPTION OF DRAWINGS

FIG. 1 is a possible and non-limiting diagram of a system according to an embodiment of this application;
FIG. 2a is a diagram of downlink slots according to an embodiment of this application;
FIG. 2b is a diagram of uplink slots according to an embodiment of this application;
FIG. 3 is a diagram of a timing advance value according to an embodiment of this application;
FIG. 4a and FIG. 4b are diagrams of system architectures of a communication system according to an embodiment of this application;
FIG. 5 is a diagram of communication performed by a communication apparatus according to an embodiment of this application;
FIG. 6 is a schematic flowchart of a communication method according to an embodiment of this application;
FIG. 7 is a diagram of a time sequence according to an embodiment of this application;
FIG. 8 is a block diagram of a communication apparatus 80 according to an embodiment of this application;
FIG. 9 is another block diagram of a communication apparatus 800 according to an embodiment of this application; and
FIG. 10 is a diagram of a structure of a terminal device 1000 according to an embodiment of this application.

### DESCRIPTION OF EMBODIMENTS

The following describes technical solutions of this application with reference to accompanying drawings.

The technical solutions provided in this application may be applied to various communication systems.

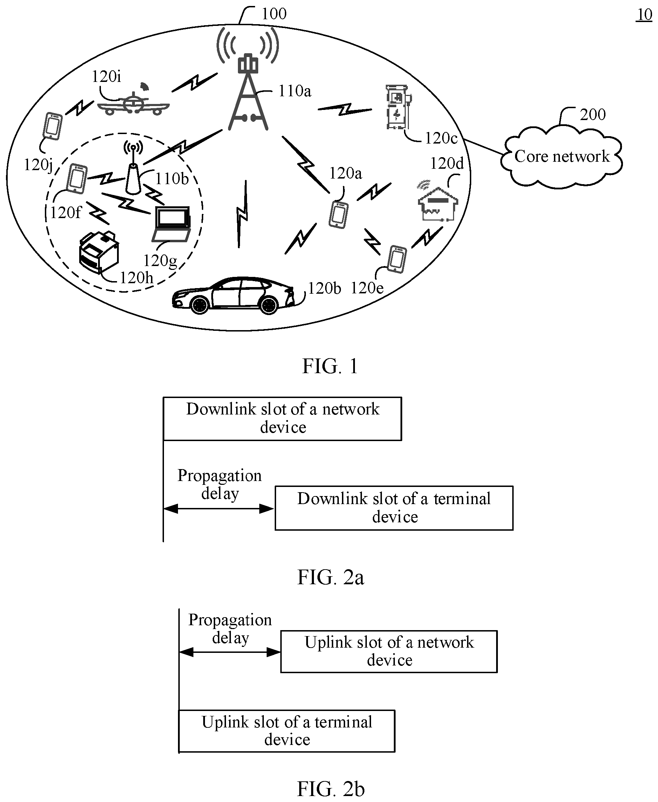

FIG. 1 is a possible and non-limiting diagram of a system according to an embodiment of this application. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may also include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices respectively, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open radio access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

The RAN node 110 may also be referred to as a network device, an access network device, a RAN entity, an access node, or the like sometimes, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are both referred to as communication apparatuses sometimes. For example, the network elements 110a and 110b in FIG. 1 may be understood as communication apparatuses having a function of a base station, and the network elements 120a to 120j may be understood as communication apparatuses having a function of a terminal.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

In a wireless communication system, a slot is used as a basic time unit for uplink and downlink transmission, in other words, transmission of data is performed once in each slot. A slot start moment of a network device is fixed, and uplink and downlink slots are aligned. A slot of a terminal device is not aligned with a slot of the network device. FIG. 2a is a diagram of downlink slots according to an embodiment of this application. In FIG. 2a, a downlink slot of the terminal device is later than a downlink slot of the network device. This is mainly because a specific propagation delay is needed for data sent by the network device to arrive at the terminal device in downlink transmission. Similarly, FIG. 2b is a diagram of uplink slots according to an embodiment of this application. In FIG. 2b, an uplink slot of the network device is later than an uplink slot of the terminal device. This is because a specific propagation delay is needed for data sent by the terminal device to arrive at the network device in uplink transmission.

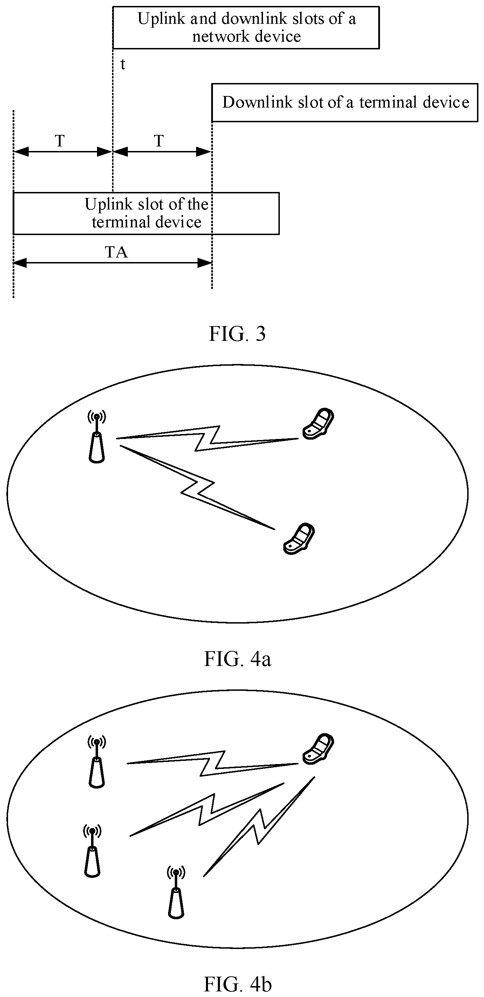

Based on the foregoing time relationship, to ensure that time at which the data sent by the terminal device arrives at the network device matches the uplink slot of the network device, so as to improve communication efficiency, the network device may usually calculate a timing advance (timing advance, TA) value, and then send the TA value to the terminal device, so that the terminal device can send a signal, a message, or the like based on the TA value. FIG. 3 is a diagram of a timing advance value according to an embodiment of this application. A signal propagation delay between a network device and a terminal device is T. A signal sent by the network device at time t is not received on a terminal device side until time t+T. Therefore, a downlink slot start moment of the terminal device is later than a downlink slot start moment of the network device by time T. In addition, because the signal propagation delay between the network device and the terminal device is T, a signal sent by the terminal device at time t-T is not received on a network device side until t. Therefore, an uplink slot start moment of the terminal device is earlier than an uplink slot start moment of the network device by time T. Therefore, the uplink slot start moment of the terminal device needs to be earlier than the downlink slot start moment of the terminal device by 2T, to ensure that arrival time of data sent by the terminal device matches the uplink slot start moment of the network device. A time difference (namely, 2T) between the uplink slot start moment and the downlink slot start moment is also referred to as a timing advance (timing advance, TA) value. For downlink transmission, the terminal device determines the downlink slot start moment of the terminal device by measuring a downlink pilot signal, and receives a downlink signal based on the downlink slot start moment. For uplink transmission, the terminal device needs to determine the TA value, and determine the uplink slot start moment (to be specific, the downlink slot start moment-the TA value) based on the TA value and the downlink slot start moment, to send an uplink signal.

Because uplink coverage and downlink coverage of the network device may be unbalanced (generally, downlink coverage is better than uplink coverage), some network devices that have an uplink receiving function but do not have a downlink sending function may be deployed to compensate uplink coverage.

For a network device that is of this type and that has an uplink receiving function but does not have a downlink sending function, when performing uplink transmission to the network device, the terminal device also needs to determine a TA value corresponding to the network device. However, because the network device of this type does not have the downlink sending function, and cannot send the TA value to the terminal device, time at which data sent by the terminal device arrives at the network device does not match an uplink slot of the network device. Consequently, data transmission efficiency is low. Therefore, how to improve the data transmission efficiency is a problem that needs to be resolved.

To facilitate understanding of the beam measurement method provided in embodiments of this application, the following describes a system architecture for the beam measurement method provided in embodiments of this application. It may be understood that the system architecture described in embodiments of this application is intended to describe the technical solutions in embodiments of this application more clearly, and does not constitute any limitation on the technical solutions provided in embodiments of this application.

FIG. 4a and FIG. 4b are diagrams of system architectures of a communication system according to an embodiment of this application.

As shown in FIG. 4a, the communication system includes one or more network devices (one network device is used as an example in the figure) and one or more terminal devices (two terminal devices are used as an example in the figure). It can be learned that one network device may transmit data or control signaling to the one or more terminal devices.

As shown in FIG. 4b, the communication system includes one or more network devices (three network devices are used as an example in the figure) and one or more terminal devices (one terminal device is used as an example in the figure). It can be learned that a plurality of network devices may transmit data or control signaling to the one terminal device.

In the communication systems shown in FIG. 4a and FIG. 4b, the terminal devices may be mobile or fixed. The network device may be a micro base station, or may be a TRP or another type of network device. This is not limited in embodiments of this application. The network device may provide communication coverage for a specific geographical area, and may be in radio link communication with a terminal device located in the coverage area (a cell).

Optionally, the communication system shown in the communication system may include more network devices, and coverage of each network device may include another quantity of terminal devices. This is not limited in embodiments of this application.

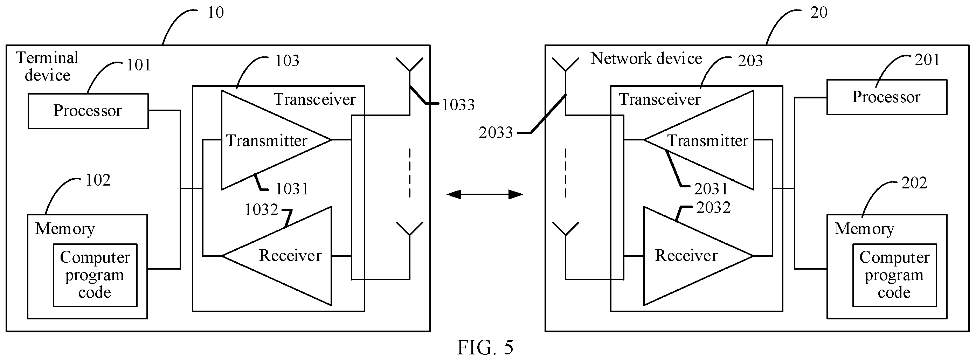

FIG. 5 is a diagram of communication performed by a communication apparatus according to an embodiment of this application.

As shown in FIG. 5, a terminal device 10 logically includes a plurality of parts, for example, includes a processor 101, a memory 102, and a transceiver 103. The transceiver 103 includes a transmitter 1031, a receiver 1032, and an antenna 1033. A network device 20 logically includes a plurality of parts, for example, includes a processor 201, a memory 202, and a transceiver 203. The transceiver 203 includes a transmitter 2031, a receiver 2032, and an antenna 2033. The receiver 1032 may be configured to receive, via the antenna 1033, information sent by the network device 20. The transmitter 1031 may be configured to send information to the network device 20 via the antenna 1033. The transmitter 2031 may be configured to send information to the terminal device 10 via the antenna 2033. The receiver 2032 may be configured to receive, via the antenna 2033, information sent by the terminal device 10.

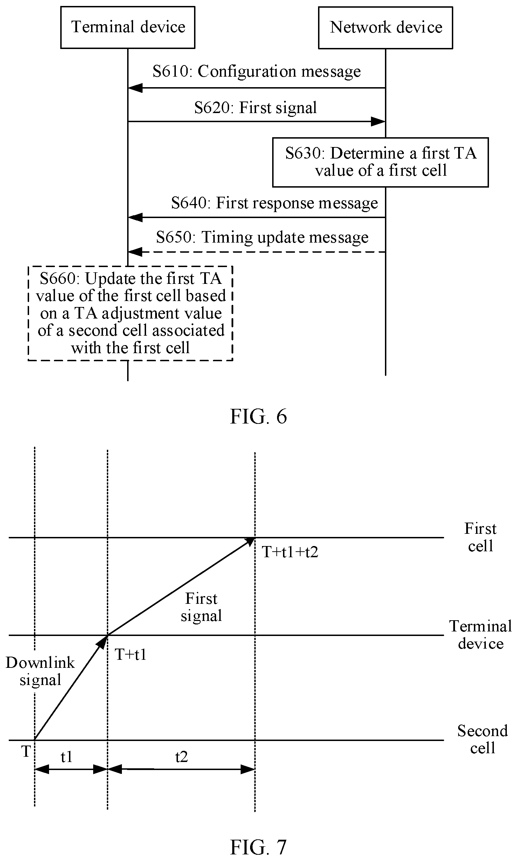

The following describes in detail a communication method provided in this application with reference to FIG. 6.

FIG. 6 is a schematic flowchart of a communication method according to an embodiment of this application. The method shown in FIG. 6 may include step S610 to step S640.

Step S610: A network device sends a configuration message to a terminal device. For example, the network device may be a second network device. The second network device may be a network device with an uplink receiving capability and a downlink sending capability. In other words, a cell corresponding to the second network device is a cell with an uplink receiving capability and a downlink sending capability.

Correspondingly, the terminal device receives the configuration message.

In a possible implementation, the configuration message may be a radio resource control (Radio resource control, RRC) message.

The configuration message includes a configuration parameter of one or more cells. The one or more cells include a first cell. The first cell is a cell with only an uplink receiving capability. In other words, the first cell may receive a message sent by the terminal device, but cannot send a message to the terminal device. It may be specified that the first cell can only be used as a secondary cell, and cannot be used as a primary cell. The network device configures a maximum of M first cells for the terminal device. M may be specified in a protocol, or may be reported by the terminal device to the network device. If the terminal device reports M=0, it indicates that the terminal device does not support the first cell.

The terminal device needs to determine whether a cell is the first cell, and may specifically use any one of the following methods.

In a possible implementation, the first cell is a cell that meets one or more of the following:
no downlink bandwidth part (bandwidth part, BWP) is in a configuration parameter of the cell;
no physical downlink shared channel (physical downlink sharing channel, PDSCH) parameter is in the configuration parameter of the cell;
no physical downlink control channel (physical downlink control channel, PDCCH) parameter is in the configuration parameter of the cell;
no channel state information (channel state information, CSI) measurement parameter is in the configuration parameter of the cell;
no uplink-downlink frame structure parameter is in the configuration parameter of the cell; and
a second cell associated with the cell is included in the configuration parameter of the cell. The second cell is a cell with a downlink sending capability. The terminal device may determine, by using downlink timing of the second cell, uplink timing of the first cell associated with the second cell. Alternatively, the terminal device may perform, by using downlink timing of the second cell, uplink transmission in the first cell associated with the second cell.

In other words, the terminal device may determine, depending on whether the configuration parameter of the cell meets one or more of the foregoing, whether the cell is the first cell.

In an example, if no downlink bandwidth part is in a configuration parameter of a cell, the terminal device determines that the cell is the first cell. Alternatively, if no physical downlink control channel parameter is in a configuration parameter of a cell, the terminal device determines that the cell is the first cell. Alternatively, if no CSI measurement parameter is in a configuration parameter of a cell, the terminal device determines that the cell is the first cell. Alternatively, if no uplink-downlink frame structure parameter is in a configuration parameter of a cell, the terminal device determines that the cell is the first cell. Alternatively, if no uplink-downlink frame structure parameter is in a configuration parameter of a cell, the terminal device determines that the cell is the first cell. Alternatively, if a second cell associated with a cell is included in a configuration parameter of the cell, the terminal device determines that the cell is the first cell.

The PDSCH parameter may be a PDSCH-related parameter, the PDCCH parameter may be a PDCCH-related parameter, and the CSI measurement parameter may be a CSI measurement-related parameter.

Alternatively, in a possible implementation, the first cell is a cell that meets one or more of the following:
no downlink bandwidth part is configured for the cell;
no physical downlink shared channel parameter is configured for the cell;
no physical downlink control channel parameter is configured for the cell;
no channel state information measurement parameter is configured for the cell;
no uplink-downlink frame structure parameter is configured for the cell; and
an associated second cell is configured for the cell.

In an example, if no physical downlink shared channel parameter and no physical downlink control channel parameter are configured for a cell, the terminal device determines that the cell is the first cell. If a physical downlink shared channel parameter or a physical downlink control channel parameter is configured for a cell, the terminal device determines that the cell is not the first cell. In another example, when the terminal device determines, depending on whether a channel state information measurement parameter is configured, whether a cell is the first cell, if no channel state information measurement parameter is configured for a cell, the terminal device determines that the cell is the first cell. If a channel state information measurement parameter is configured for a cell, the terminal device determines that the cell is not the first cell. In a possible implementation, for any cell in the one or more cells, if a configuration parameter corresponding to the any cell includes a first parameter, the any cell is the first cell; or if a value of a first parameter in a configuration parameter of the any cell is a first value, the any cell is the first cell.

In other words, the terminal device may determine, depending on whether the configuration parameter of the cell includes the first parameter or whether the included first parameter is of the first value, whether the cell is the first cell.

In an example, when the terminal device determines, depending on whether the configuration parameter of the cell includes the first parameter, whether the cell is the first cell, if the configuration parameter of the cell includes the first parameter, the terminal device determines that the cell is the first cell. If the configuration parameter of the cell does not include the first parameter, the terminal device determines that the cell is not the first cell.

In another example, when the terminal device determines, depending on whether the first parameter in the configuration parameter of the cell is of the first value, whether the cell is the first cell, if the value of the first parameter in the configuration parameter of the cell is the first value, the terminal device determines that the cell is the first cell. If the value of the first parameter in the configuration parameter of the cell is not the first value, for example, is a second value, the terminal device determines that the cell is not the first cell.

In addition to the first cell, the one or more cells further include a second cell. One first cell and one second cell may be associated. The second cell associated with the first cell may be configured by using the foregoing configuration information. The second cell associated with the first cell may alternatively be determined according to a first rule. For example, a second cell associated with a first cell is a primary cell corresponding to the first cell, in other words, a primary cell in a cell group to which the first cell belongs. For another example, a second cell associated with a first cell is an initial second cell/a last second cell/a second cell with a smallest identity (IDentity, ID)/a second cell with a largest ID in all second cells configured for the terminal device. For another example, a second cell associated with a first cell is an initial cell/a last cell/a cell with a smallest ID/a cell with a largest ID in a cell group or a timing advance group to which the first cell belongs. The timing advance group is a group of cells that use same timing.

Step S620: The terminal device sends a first signal to the network device at a first moment via the first cell.

For example, the network device may be a first network device. In this case, correspondingly, the first network device receives the first signal sent by the terminal device at the first moment via the first cell. The first network device may be a network device with only an uplink receiving capability. In other words, a cell corresponding to the first network device is a cell with only an uplink receiving capability, to be specific, the first cell.

The first moment is related to first downlink timing, and the first downlink timing is downlink timing of the second cell associated with the first cell. The downlink timing may be a downlink slot start moment, may be specifically a downlink slot start moment corresponding to the terminal device, or may be a start moment at which the terminal device receives a signal in one slot. The first downlink timing is determined by using a downlink reference signal of the first cell. The first downlink timing may alternatively be time at which the terminal device receives a signal on an initial channel space path in one slot of the first cell. The first downlink timing may alternatively be directly configured by the network device for the terminal device.

In a possible implementation, uplink-downlink slot switching of the terminal device may need time. It is assumed that the time needed for the uplink-downlink slot switching is an uplink timing offset. In this case, the first moment may be the first downlink timing plus an uplink timing offset corresponding to the first cell. The uplink timing offset corresponding to the first cell may be configured by the network device for the terminal device by using the configuration information.

The first signal is used by the network device to measure a first TA value of the first cell. The first signal may be a random access request, or may be another channel sounding reference signal (Sounding Reference Signal, SRS). This is not limited in embodiments of this application.

The second cell associated with the first cell may be determined in any one of the following four manners.

Manner 1: In a possible implementation, the cells include one or more second cells. The configuration message includes an association relationship between the second cells and the first cell.

In other words, the cells configured by using the configuration message for the terminal device include the one or more second cells. In addition, the configuration message includes the association relationship between the second cells and the first cell. Therefore, the terminal device may determine, based on the association relationship between the first cell and the second cells in the configuration message, the second cell associated with the first cell.

Manner 2: In a possible implementation, the cells include one or more second cells. The second cell associated with the first cell may be an initial second cell/a last second cell/a second cell with a smallest identity/a second cell with a largest identity in the one or more second cells.

In other words, the cells configured by using the configuration message for the terminal device include the one or more second cells. However, the configuration message does not include a relationship between the first cell and the second cells. In this case, the second cell associated with the first cell may be determined according to some preset rules. For example, the second cell associated with the first cell is the initial second cell/the last second cell/the second cell with the smallest identity/the second cell with the largest identity in the one or more second cells included in the configuration message. The initial second cell may be a second cell that is first configured for the terminal device in the configuration message, in other words, a second cell ranked at an initial place in the one or more second cells included in the configuration message. The last second cell may be a second cell that is last configured for the terminal device in the configuration message, in other words, a second cell ranked at a last place in the one or more second cells included in the configuration message.

Manner 3: In a possible implementation, the cells include one or more second cells. In other words, the cells configured by using the configuration message for the terminal device include the one or more second cells. An association relationship between the first cell and the second cells may be determined based on an arrangement sequence of the first cell and an arrangement sequence of the second cells.

In an example, if the configuration message includes a first cell A, a first cell B, and a first cell C, and further includes a second cell a, a second cell b, a second cell c; and in the configuration message, a sequence of the first cells is the first cell A, the first cell B, and the first cell C, and a sequence of the second cells is the second cell c, the second cell a, and the second cell b, the terminal device may consider that the first cell A is associated with the second cell c, the first cell B is associated with the second cell a, and the first cell C is associated with the second cell b. In another example, if the configuration message includes a first cell A, a first cell B, and a first cell C, and further includes a second cell a, a second cell b, a second cell c; and in the configuration message, a sequence of the cells is the first cell A, the second cell c, the first cell B, the second cell a, the first cell C, and the second cell b, the terminal device may consider that the first cell A is associated with the second cell c, the first cell B is associated with the second cell a, and the first cell C is associated with the second cell b. In still another example, the first cell is associated with a second cell that is closest to the first cell and that follows the first cell. For example, if the configuration message includes a first cell A, a first cell B, and a first cell C, and further includes a second cell a, a second cell b, a second cell c; and in the configuration message, a sequence of the cells is the first cell A, the first cell B, the second cell c, the second cell a, the first cell C, and the second cell b, the terminal device considers that the first cell A is associated with the second cell c, the first cell B is associated with the second cell c, and the first cell C is associated with the second cell b. The foregoing provides some distances in which the association relationship between the first cell and the second cells may be determined based on the arrangement sequence of the first cell and the arrangement sequence of the second cells, and shall not constitute any limitation on embodiments of this application.

Manner 4: In a possible implementation, the second cell associated with the first cell is a primary cell in a cell group to which the first cell belongs; or the second cell associated with the first cell is an initial second cell/a last second cell/a second cell with a smallest identity/a second cell with a largest identity in a cell group or a timing advance group to which the first cell belongs.

In this manner, the configuration message may not include the second cell. The second cell associated with the first cell is obtained based on the first cell. In an example, the primary cell in the cell group to which the first cell belongs is used as the second cell associated with the first cell. For example, a cell group includes a first cell A, a second cell B, and a second cell C, where the second cell B is a primary cell in the cell group. In this case, a second cell associated with the first cell A is the second cell B. In a possible implementation, the first cell is not used as the primary cell in the cell group. In another example, the initial second cell/the last second cell/the second cell with the smallest identity/the second cell with the largest identity in the cell group or the timing advance group to which the first cell belongs is used as the second cell associated with the first cell. The timing advance group is a group of cells with a same TA value.

In a possible implementation, after step S620, the following may be included: The first network device forwards first information to the second network device.

Correspondingly, the second network device receives the first information sent by the first network device. The first information may include the first TA value corresponding to the first cell. Alternatively, the first information may include information used to calculate the first TA value corresponding to the first cell, for example, a moment at which the first network device receives the first signal.

Step S630: The network device determines the first TA value of the first cell.

The first TA value may be determined by the first network device. The first TA value may alternatively be determined by the second network device. For example, the first network device sends, to the second network device by using the first information, the information used to calculate the first TA value, and the second network device calculates the first TA.

For example, the network device determines the first TA value of the first cell based on the uplink timing of the first cell and a second moment. The first TA value is a difference between the second moment and the uplink timing of the first cell.

It may be learned that the TA value may be represented as a difference between a start moment of a downlink signal of the terminal device and a start moment of an uplink signal of the terminal device.

FIG. 7 is a diagram of a time sequence according to an embodiment of this application. The second cell sends a downlink signal to the terminal device at time T. If a propagation delay of sending the downlink signal from the second cell to the terminal device is t1, it may be learned that time at which the terminal device receives the downlink signal is T+t1, that is, the downlink slot start time of the terminal device is T+t1. When the downlink signal is received, the terminal device sends the first signal via the first cell. Therefore, T+t1 is the first moment, that is, the first downlink timing. In other words, the first moment is related to the downlink timing of the second cell. If a propagation delay of sending an uplink signal (for example, the first signal) from the terminal device to the first cell is t2, the first cell receives the first signal at T+t1+t2. That is, the second moment is T+t1+t2. Because uplink and downlink slot start moments of the network device are fixed and aligned, the uplink timing (uplink slot start moment) of the first cell is known. Assuming that the uplink timing of the first cell is T1, the first TA value of the first cell may be represented as T+t1+t2-T1.

In FIG. 7, when the first moment is the first downlink timing plus an uplink timing offset corresponding to the first cell, if the uplink timing offset corresponding to the first cell is t3, and the second cell sends a downlink signal to the terminal device at the time T: If a propagation delay of sending the downlink signal from the second cell to the terminal device is t1, it may be learned that time at which the terminal device receives the downlink signal is T+t1. In other words, the downlink slot start moment of the terminal device, that is, the first downlink timing, is T+t1. The first moment is the first downlink timing plus the uplink timing offset corresponding to the first cell. It may be learned that the first moment is T+t1+t3. If a propagation delay of sending an uplink signal (for example, the first signal) from the terminal device to the first cell is t2, the first cell receives the first signal at T+t1+t3+t2. That is, the second moment is T+t1+t3+t2. Because uplink and downlink slot start moments of the network device are fixed and aligned, the uplink timing (uplink slot start moment) of the first cell is known. Assuming that the uplink timing of the first cell is T1, the first TA value of the first cell may be represented as T+t1+t3+t2-T1.

Step S640: The network device sends a first response message to the terminal device via the second cell.

Correspondingly, the terminal device receives the first response message sent by the network device. The first response message includes the first TA value of the first cell.

For example, the second network device sends the first response message via the second cell, where the first response message includes the first TA value of the first cell.

Correspondingly, the terminal device receives the first TA value that is of the first cell and that is sent by the second network device via the second cell. After receiving the first TA value, in subsequent uplink transmission, the terminal device may send an uplink signal earlier than an uplink slot start moment T+t1 of the terminal device by the first TA value, so that it can be ensured that time at which the uplink signal arrives at the first cell is exactly the uplink slot start time of the first cell.

In a possible implementation, the first response message may further include an index of the first cell or an index of the timing advance group to which the first cell belongs.

The first response message includes the index of the first cell or the index of the timing advance group to which the first cell belongs, so that the terminal device obtains the index of the first cell or the index of the timing advance group to which the first cell belongs. Therefore, when the configuration message includes a plurality of first cells, the terminal device may determine, based on indexes of the first cells or indexes of timing advance groups to which the first cells belong, a first cell corresponding to the first TA value.

In a possible implementation, after step S640, the method may further include step S650 and step S660.

Step S650: The network device sends a timing update message to the terminal device.

Correspondingly, the terminal device receives the timing update message sent by the network device.

For example, the network device may be the second network device.

The timing update message includes an TA adjustment value corresponding to the second cell associated with the first cell.

In a possible implementation, the timing update message further includes an index of the second cell associated with the first cell or an index of a timing advance group to which the second cell associated with the first cell belongs. The network device sends, to the terminal device, the index of the second cell associated with the first cell, so that when the configuration message includes the plurality of first cells, the terminal device may determine, based on an index of a second cell associated with the first cell or an index of a timing advance group to which the second cell associated with the first cell belongs, a first cell that corresponds to an TA adjustment value corresponding to the second cell and whose first TA value needs to be updated.

In a possible implementation, a second parameter may be included. The second parameter indicates whether the terminal device updates, by using the TA adjustment value of the second cell, the first TA value of the first cell associated with the second cell.

Step S660: The terminal device updates the first TA value of the first cell based on the TA adjustment value corresponding to the second cell associated with the first cell.

After receiving the TA adjustment value corresponding to the second cell associated with the first cell, the terminal device uses, as an TA adjustment value of the first cell, a half of the TA adjustment value corresponding to the second cell, and updates the TA value of the first cell based on the TA adjustment value.

Step S650 and step S660 are optional steps, and are represented by using dashed lines in FIG. 6.

In a possible implementation, after step S640, the second network device may send the timing update message. The timing update message includes the TA adjustment value of the first cell. Correspondingly, the terminal device receives the TA adjustment value that is of the first cell and that is sent by the second network device, and updates the first TA value of the first cell based on the TA adjustment value of the first cell. After receiving the TA adjustment value of the first cell, the terminal device uses the TA adjustment value of the first cell as a new first TA value of the first cell, and performs uplink transmission with the first cell based on the new first TA value.

In a possible implementation, the timing update message includes the index of the first cell or the index of the timing advance group to which the first cell belongs. The index of the first cell is sent to the terminal device, so that when the configuration message includes the plurality of first cells, the terminal device may determine, based on indexes of the first cells or indexes of timing advance groups to which the first cells belong, a first cell that corresponds to an TA adjustment value of the first cell and whose first TA value needs to be updated.

The following describes possible communication apparatuses provided in embodiments of this application.

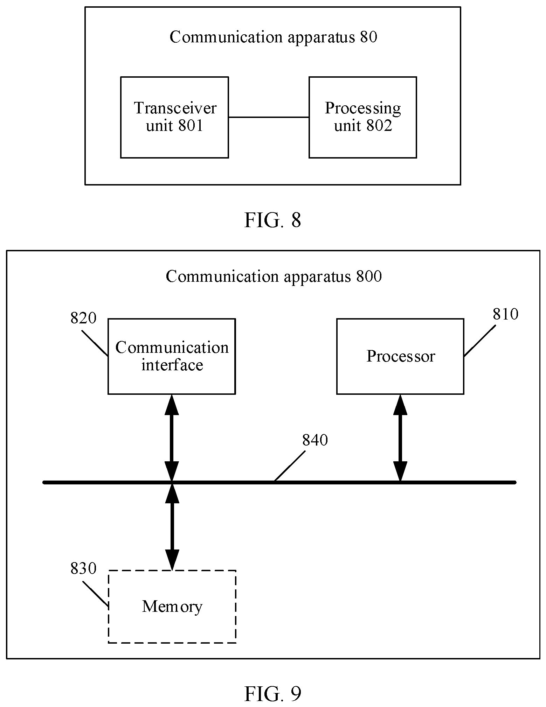

FIG. 8 to FIG. 10 are diagrams of structures of possible communication apparatuses according to embodiments of this application.

FIG. 8 is a block diagram of a communication apparatus 80 according to an embodiment of this application.

As shown in FIG. 8, the communication apparatus 80 includes a transceiver unit 801 and a processing unit 802.

The communication apparatus 80 may be configured to implement a function of the terminal device or the network device in the method embodiment shown in FIG. 6.

When the communication apparatus 80 is configured to implement the function of the terminal device in the method embodiment shown in FIG. 6, the transceiver unit 801 may be configured to perform step S610 in FIG. 6, to be specific, receive a configuration message, where the configuration message includes a configuration parameter of one or more cells; may be configured to perform step S620 in FIG. 6, to be specific, send a first signal at a first moment via a first cell; and may be further configured to perform step S640 in FIG. 6, to be specific, receive a first response message sent by the network device via a second cell. The processing unit 802 may be configured to perform step S660 in FIG. 6, to be specific, update a first TA value of the first cell based on an TA adjustment value corresponding to the second cell associated with the first cell.

When the communication apparatus 80 is configured to implement the function of the network device in the method embodiment shown in FIG. 6, the transceiver unit 801 may be configured to perform step S610 in FIG. 6, to be specific, send a configuration message, where the configuration message includes a configuration parameter of one or more cells; and may be configured to perform step S620 in FIG. 6, to be specific, receive a first signal sent by the terminal device at a first moment via a first cell. The processing unit 802 may be configured to perform step S630 in FIG. 6, to be specific, determine a first TA value of the first cell. The transceiver unit 801 is further configured to perform step S640 in FIG. 6, to be specific, send a first response message via a second cell; and is further configured to perform step S650 in FIG. 6, to be specific, send a timing update message.

For more detailed descriptions about the transceiver unit 801 and the processing unit 802, directly refer to related descriptions in the method embodiment shown in FIG. 6. Details are not described herein again.

It should be understood that division into the units in embodiments of this application is an example, and is merely logical function division, and there may be another division manner in an actual implementation. In addition, functional units in embodiments of this application may be integrated into one processor, each of the units may exist alone physically, or two or more units may be integrated into one unit. The integrated unit may be implemented in a form of hardware, or may be implemented in a form of a software functional unit.

FIG. 9 is another block diagram of a communication apparatus 800 according to an embodiment of this application. The apparatus 800 may be a chip system, or may be an apparatus configured with a chip system, to implement the method in the foregoing method embodiment. In this embodiment of this application, the chip system may include a chip or may include a chip and another discrete device.

As shown in FIG. 9, the apparatus 800 may include a processor 810 and a communication interface 820. The communication interface 820 may be configured to communicate with another device through a transmission medium, so that the apparatus 800 may communicate with the another device. The communication interface 820 may be, for example, a transceiver, an interface, a bus, a circuit, or an apparatus that can implement a transceiver function. The processor 810 may input and output data through the communication interface 820, and is configured to implement the method described in the embodiment corresponding to FIG. 6. Specifically, the apparatus 800 may be configured to implement a function of the network device or the terminal device in the foregoing method embodiment. The apparatus 800 may be a chip. It may be understood that, when the apparatus 800 is the chip, the communication interface may be an input/output interface. The input interface is configured to perform a receiving step in embodiments. For example, first indication information is received through the input interface, and first reporting information is received through the input interface. The output interface is configured to perform a sending step in embodiments. For example, the first indication information is sent through the output interface, and the first reporting information is sent through the input interface.

Optionally, the apparatus 800 further includes at least one memory 830, configured to store program instructions and/or data. The memory 830 is coupled to the processor 810. The coupling in this embodiment of this application may be an indirect coupling or a communication connection between apparatuses, units, or modules in an electrical form, a mechanical form, or another form, and is used for information exchange between the apparatuses, the units, or the modules. The processor 810 may cooperate with the memory 830. The processor 810 may execute the program instructions stored in the memory 830. At least one of the at least one memory 830 may be included in the processor 810. At least one of the at least one memory 830 may be built in the communication apparatus 800. At least one of the at least one memory 830 may be disposed outside the communication apparatus 800. Therefore, as shown in the figure, the memory 830 is represented by using a dashed line in FIG. 9.

A specific connection medium between the processor 810, the communication interface 820, and the memory 830 is not limited in this embodiment of this application. In this embodiment of this application, in FIG. 9, the processor 810, the communication interface 820, and the memory 830 are connected through a bus 840. The bus 840 is represented by using a bold line in FIG. 9. A connection manner between other components is merely an example for description, and is not limited thereto. The bus may be classified into an address bus, a data bus, a control bus, and the like. For ease of representation, only one bold line is used to represent the bus in FIG. 9, but this does not mean that there is only one bus or only one type of bus.

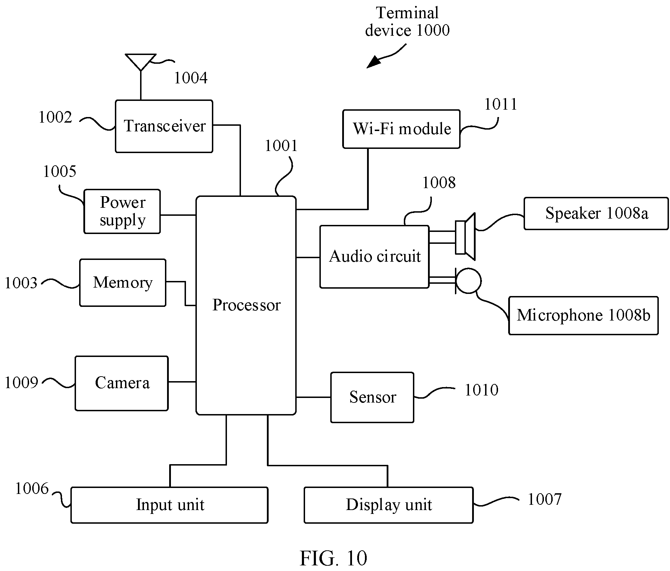

FIG. 10 is a diagram of a structure of a terminal device 1000 according to an embodiment of this application. The terminal device 1000 may be configured to implement the steps performed by the terminal device in the embodiment shown in FIG. 6. As shown in FIG. 10, the terminal device 1000 includes a processor 1001 and a transceiver 1002.

Optionally, the terminal device 1000 further includes a memory 1003. The processor 1001, the transceiver 1002, and the memory 1003 may communicate with each other through an internal connection path, to perform transmission of a control signal and/or a data signal. The memory 1003 is configured to store a computer program. The processor 1001 is configured to invoke the computer program from the memory 1003 and run the computer program, to control the transceiver 1002 to send and receive signals.

Optionally, the terminal device 1000 may further include an antenna 1004, configured to send, by using a radio signal, uplink data or uplink control signaling output by the transceiver 1002. Optionally, the terminal device 1000 further includes a Wi-Fi module 1011, configured to access a wireless network.

The processor 1001 and the memory 1003 may be combined into one processing apparatus, and the processor 1001 is configured to execute program code stored in the memory 1003 to implement the foregoing function. During specific implementation, the memory 1003 may alternatively be integrated into the processor 1001, or may be independent of the processor 1001.

The transceiver 1002 may correspond to the transceiver unit 801 in FIG. 8 or the communication interface 820 in FIG. 9. The transceiver 1002 may include a receiver machine (or referred to as a receiver or a receiving circuit) and a transmitter machine (or referred to as a transmitter or a transmitting circuit). The receiver machine is configured to receive a signal, and the transmitter machine is configured to transmit a signal.

Optionally, the terminal device 1000 may further include a power supply 1005, configured to supply power to various devices or circuits in the terminal device 1000.

In addition, to improve a function of the terminal device, the terminal device 1000 may further include one or more of an input unit 1006, a display unit 1007, an audio circuit 1008, a camera 1009, a sensor 1010, and the like, and the audio circuit may further include a speaker 1008a, a microphone 1008b, and the like.

It should be understood that operations and/or functions of the modules in the terminal device 1000 are separately intended to implement the corresponding procedures in the foregoing method embodiment. For details, refer to the descriptions in the foregoing method embodiment. To avoid repetition, detailed descriptions are properly omitted herein.

This application further provides a computer program product. The computer program product includes a computer program (which may also be referred to as code or instructions). When the computer program is run, the method in the embodiment shown in FIG. 6 may be implemented.

This application further provides a computer-readable storage medium. The computer-readable storage medium stores a computer program (which may also be referred to as code or instructions). When the computer program is run, the method in the embodiment shown in FIG. 6 may be implemented.

An embodiment of this application provides a communication system. The system includes the foregoing terminal device and network device.

It should be noted that the processor in embodiments of this application may be an integrated circuit chip, and has a signal processing capability. In an implementation process, steps in the foregoing method embodiment can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the method, the steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and method described in this specification includes but is not limited to these and any memory of another proper type.

Terms such as "unit" and "module" used in this specification may represent computer-related entities, hardware, firmware, combinations of hardware and software, software, or software being executed. The units and the modules in embodiments of this application have a same meaning, and may be used interchangeably.

A person of ordinary skill in the art may be aware that, in combination with illustrative logical blocks (illustrative logical blocks) and steps (steps) described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When the software is used for implementation, all or a part of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), or an optical medium (for example, a digital versatile disc (digital video disc, DVD)), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, technical solutions of this application essentially, the part contributing to technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving a configuration message, wherein the configuration message comprises a configuration parameter of one or more cells, the cells comprise a first cell, and the first cell is a cell with only an uplink receiving capability;
sending a first signal at a first moment via the first cell, wherein the first moment is related to first downlink timing, the first downlink timing is downlink timing of a second cell associated with the first cell, and the second cell is a cell with an uplink receiving capability and a downlink sending capability; and
receiving a first response message via the second cell, wherein the first response message comprises a first timing advance TA value of the first cell.

2. The method according to claim 1, wherein the first cell is a cell that meets one or more of the following:
no downlink bandwidth part is configured for the cell;
no physical downlink shared channel parameter is configured for the cell;
no physical downlink control channel parameter is configured for the cell;
no channel state information measurement parameter is configured for the cell;
no uplink-downlink frame structure parameter is configured for the cell; and
an associated second cell is configured for the cell.

3. The method according to claim 1, wherein for any cell in the one or more cells, if a configuration parameter of the any cell comprises a first parameter, the any cell is the first cell; or if a value of a first parameter in a configuration parameter of the any cell is a first value, the any cell is the first cell.

4. The method according to any one of claims 1 to 3, wherein the cells further comprise one or more second cells, the configuration message comprises an association relationship between the first cell and the second cells, and the second cell associated with the first cell is determined based on the association relationship.

5. The method according to any one of claims 1 to 3, wherein the cells further comprise one or more second cells, and the second cell associated with the first cell is an initial second cell/a last second cell/a second cell with a smallest identity/a second cell with a largest identity in the one or more second cells.

6. The method according to any one of claims 1 to 3, wherein the second cell associated with the first cell is a primary cell in a cell group to which the first cell belongs; or
the second cell associated with the first cell is an initial second cell/a last second cell/a second cell with a smallest identity/a second cell with a largest identity in a cell group or a timing advance group to which the first cell belongs.

7. The method according to any one of claims 1 to 6, wherein the first response message further comprises an index of the first cell or an index of the timing advance group to which the first cell belongs.

8. The method according to any one of claims 1 to 7, wherein the method further comprises:
receiving a timing update message, wherein the timing update message comprises a TA adjustment value corresponding to the second cell associated with the first cell; and
updating the first TA value of the first cell based on the TA adjustment value corresponding to the second cell associated with the first cell.

9. The method according to claim 8, wherein the timing update message further comprises an index of the second cell associated with the first cell or an index of a timing advance group to which the second cell associated with the first cell belongs.

10. A communication method, wherein the method comprises:
sending a configuration message, wherein the configuration message comprises a configuration parameter of one or more cells, the cells comprise a first cell, and the first cell is a cell with only an uplink receiving capability;
receiving, at a second moment, a first signal sent by a terminal device at a first moment, wherein the first moment is related to first downlink timing, the first downlink timing is downlink timing of a second cell associated with the first cell, and the second cell is a cell with an uplink receiving capability and a downlink sending capability;
determining a first timing advance TA value of the first cell based on uplink timing of the first cell and the second moment; and
sending a first response message via the second cell, wherein the first response message comprises the first TA value of the first cell.

11. The method according to claim 10, wherein the first cell is a cell that meets one or more of the following:
no downlink bandwidth part is configured for the cell;
no physical downlink shared channel parameter is configured for the cell;
no physical downlink control channel parameter is configured for the cell;
no channel state information measurement parameter is configured for the cell;
no uplink-downlink frame structure parameter is configured for the cell; and
an associated second cell is configured for the cell.

12. The method according to claim 10, wherein for any cell in the one or more cells, if a configuration parameter of the any cell comprises a first parameter, the any cell is the first cell; or if a value of a first parameter in a configuration parameter of the any cell is a first value, the any cell is the first cell.

13. The method according to any one of claims 10 to 12, wherein the cells further comprise one or more second cells, the configuration message comprises an association relationship between the first cell and the second cells, and the second cell associated with the first cell is determined based on the association relationship.

14. The method according to any one of claims 10 to 12, wherein the cells further comprise one or more second cells, and the second cell associated with the first cell is an initial second cell/a last second cell/a second cell with a smallest identity/a second cell with a largest identity in the one or more second cells.

15. The method according to any one of claims 10 to 12, wherein the second cell associated with the first cell is a primary cell in a cell group to which the first cell belongs; or
the second cell associated with the first cell is an initial second cell/a last second cell/a second cell with a smallest identity/a second cell with a largest identity in a cell group or a timing advance group to which the first cell belongs, and one or more cells in the timing advance group have a same TA value.

16. The method according to any one of claims 10 to 15, wherein the first response message further comprises an index of the first cell or an index of the timing advance group to which the first cell belongs.

17. The method according to any one of claims 10 to 16, wherein the method further comprises:
sending a timing update message, wherein the timing update message comprises an TA adjustment value corresponding to the second cell associated with the first cell.

18. The method according to claim 17, wherein the timing update message further comprises an index of the second cell associated with the first cell or an index of a timing advance group to which the second cell associated with the first cell belongs.

19. A communication apparatus, wherein the apparatus comprises:
a transceiver unit, configured to receive a configuration message, wherein the configuration message comprises a configuration parameter of one or more cells, the cells comprise a first cell, and the first cell is a cell with only an uplink receiving capability, wherein
the transceiver unit is further configured to send a first signal at a first moment via the first cell, wherein the first moment is related to first downlink timing, the first downlink timing is downlink timing of a second cell associated with the first cell, and the second cell is a cell with an uplink receiving capability and a downlink sending capability; and
the transceiver unit is further configured to receive a first response message via the second cell, wherein the first response message comprises a first timing advance TA value of the first cell.

20. The apparatus according to claim 19, wherein the first cell is a cell that meets one or more of the following:
no downlink bandwidth part is configured for the cell;
no physical downlink shared channel parameter is configured for the cell;
no physical downlink control channel parameter is configured for the cell;
no channel state information measurement parameter is configured for the cell;
no uplink-downlink frame structure parameter is configured for the cell; and
an associated second cell is configured for the cell.

21. The apparatus according to claim 19, wherein for any cell in the one or more cells, if a configuration parameter of the any cell comprises a first parameter, the any cell is the first cell; or if a value of a first parameter in a configuration parameter of the any cell is a first value, the any cell is the first cell.

22. The apparatus according to any one of claims 19 to 21, wherein the cells further comprise one or more second cells, the configuration message comprises an association relationship between the first cell and the second cells, and the second cell associated with the first cell is determined based on the association relationship.

23. The apparatus according to any one of claims 19 to 21, wherein the cells further comprise one or more second cells, and the second cell associated with the first cell is an initial second cell/a last second cell/a second cell with a smallest identity/a second cell with a largest identity in the one or more second cells.

24. The apparatus according to any one of claims 19 to 21, wherein the second cell associated with the first cell is a primary cell in a cell group to which the first cell belongs; or
the second cell associated with the first cell is an initial second cell/a last second cell/a second cell with a smallest identity/a second cell with a largest identity in a cell group or a timing advance group to which the first cell belongs.

25. The apparatus according to any one of claims 19 to 24, wherein the first response message further comprises an index of the first cell or an index of the timing advance group to which the first cell belongs.

26. The apparatus according to any one of claims 19 to 25, wherein the apparatus further comprises a processing unit, wherein
the receiving unit is further configured to receive a timing update message, wherein the timing update message comprises an TA adjustment value corresponding to the second cell associated with the first cell; and
the processing unit is configured to update the first TA value of the first cell based on the TA adjustment value corresponding to the second cell associated with the first cell.

27. The apparatus according to claim 26, wherein the timing update message further comprises an index of the second cell associated with the first cell or an index of a timing advance group to which the second cell associated with the first cell belongs.

28. A communication apparatus, wherein the apparatus comprises:
a transceiver unit, configured to send a configuration message, wherein the configuration message comprises a configuration parameter of one or more cells, the cells comprise a first cell, and the first cell is a cell with only an uplink receiving capability, wherein
the transceiver unit is further configured to receive, at a second moment, a first signal sent by a terminal device at a first moment, wherein the first moment is related to first downlink timing, the first downlink timing is downlink timing of a second cell associated with the first cell, and the second cell is a cell with an uplink receiving capability and a downlink sending capability; and
a processing unit, configured to determine a first timing advance TA value of the first cell based on uplink timing of the first cell and the second moment, wherein
the transceiver unit is further configured to send a first response message via the second cell, wherein the first response message comprises the first TA value of the first cell.

29. The apparatus according to claim 28, wherein the first cell is a cell that meets one or more of the following:
no downlink bandwidth part is configured for the cell;
no physical downlink shared channel parameter is configured for the cell;
no physical downlink control channel parameter is configured for the cell;
no channel state information measurement parameter is configured for the cell;
no uplink-downlink frame structure parameter is configured for the cell; and
an associated second cell is configured for the cell.

30. The apparatus according to claim 28, wherein for any cell in the one or more cells, if a configuration parameter of the any cell comprises a first parameter, the any cell is the first cell; or if a value of a first parameter in a configuration parameter of the any cell is a first value, the any cell is the first cell.

31. The apparatus according to any one of claims 28 to 30, wherein the cells further comprise one or more second cells, the configuration message comprises an association relationship between the first cell and the second cells, and the second cell associated with the first cell is determined based on the association relationship.

32. The apparatus according to any one of claims 28 to 30, wherein the cells further comprise one or more second cells, and the second cell associated with the first cell is an initial second cell/a last second cell/a second cell with a smallest identity/a second cell with a largest identity in the one or more second cells.

33. The apparatus according to any one of claims 28 to 30, wherein the second cell associated with the first cell is a primary cell in a cell group to which the first cell belongs; or
the second cell associated with the first cell is an initial second cell/a last second cell/a second cell with a smallest identity/a second cell with a largest identity in a cell group or a timing advance group to which the first cell belongs, and one or more cells in the timing advance group have a same TA value.

34. The apparatus according to any one of claims 28 to 33, wherein the first response message further comprises an index of the first cell or an index of the timing advance group to which the first cell belongs.

35. The apparatus according to any one of claims 28 to 34, wherein
the transceiver unit is further configured to send a timing update message, wherein the timing update message comprises an TA adjustment value corresponding to the second cell associated with the first cell.

36. The apparatus according to claim 35, wherein the timing update message further comprises an index of the second cell associated with the first cell or an index of a timing advance group to which the second cell associated with the first cell belongs.

37. A communication apparatus, comprising a processor, wherein the processor is configured to execute a computer program in a memory, to enable the apparatus to implement the method according to any one of claims 1 to 9 or the method according to any one of claims 10 to 18.

38. A computer-readable storage medium, wherein the storage medium stores a computer program or instructions; and when the computer program or instructions are executed by a computer, the method according to any one of claims 1 to 9 or the method according to any one of claims 10 to 18 is implemented.

39. A communication system, comprising a terminal device and a network device, wherein the terminal device is configured to perform the method according to any one of claims 1 to 9, and the network device is configured to perform the method according to any one of claims 10 to 18.
